(19) Europäisches Patentamt
European Patent Office
Office européen des brevets

(11) **EP 2 682 914 A1**

(12) **EUROPEAN PATENT APPLICATION**
published in accordance with Art. 153(4) EPC

(43) Date of publication:
**08.01.2014 Bulletin 2014/02**

(51) Int Cl.:
***G06Q 50/04*** *(2012.01)*    ***G06Q 10/04*** *(2012.01)*

(21) Application number: **12751721.7**

(22) Date of filing: **28.02.2012**

(86) International application number:
**PCT/JP2012/054897**

(87) International publication number:
**WO 2012/118067 (07.09.2012 Gazette 2012/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2011 JP 2011042413**

(71) Applicant: **Yokogawa Electric Corporation
Tokyo 180-8750 (JP)**

(72) Inventors:
• **INOUE Ken-ichi
Musashino-shi
Tokyo 180-8750 (JP)**

• **FUKUZAWA Mitsunori
Musashino-shi
Tokyo 180-8750 (JP)**
• **SEKI Akira
Musashino-shi
Tokyo 180-8750 (JP)**

(74) Representative: **Henkel, Breuer & Partner
Patentanwälte
Maximiliansplatz 21
80333 München (DE)**

(54) **ENERGY MANAGEMENT METHOD AND SYSTEM THEREOF, AND GUI METHOD**

(57)     Provided is an energy management method using estimate models which correspond to each of a plurality of targets of energy management and which estimate energy consumption and/or energy conversion as the respective targets of energy management are activated. The estimate models are subdivided to correspond to each of a plurality of statuses of the targets of energy management, transitioning upon a temporal axis as the targets of energy management are activated.

FIG. 1

**Description**

[Field of Art]

The present invention relates to an energy management method and system, and to a GUI method. In detail, the present invention relates to an energy management method and system, and to a GUI method using an estimate model.

The present application claims priority based on, and incorporates herein by reference, the content of Japanese patent application No. 2011-042413, filed on February 28,2011.

[Background Art]

Patents, patent application, patent publications, and scientific publications will be cited below and clearly described and, to describe prior art related to the present invention sufficiently, the content thereof are incorporated herein by reference.

In recent years, to prevent global warming, there has been a strong desire to reduce greenhouse gas and make effective use of limited resources. Given this, in using various energy such as electricity, fuel, steam, heat, and compressed air and the like, in order to make more efficient use of these energies, various energy management techniques have been proposed and made practically usable.

A specific energy management method is, as disclosed in Patent Reference 1, a method in which environmental factors are combined with estimate factors of an estimate model estimating the quantity of energy consumption, so as to enable an accurate estimate of the energy savings when facilities are changed or maintained, without the influence of changes in environmental factor.

Prior Art References

Patent Reference

Patent Reference 1: Japanese Unexamined Patent Application, First Publication No. 2007-18322

Summary of the Invention

Problem to Be Solved by the Invention

However, in order to improve the energy efficiency in an overall factory or plant, it is thought to be insufficient to build environmental factors into estimate factors of an estimate model for each of facilities used in a factory.

That is, in using an estimate model to optimize the energy efficiency in an overall factory, it is desirable that, in addition to environmental factors, energy characteristics corresponding to the operating mode in units of facilities in the factory and the running mode of the overall factory be reflected.

The present invention was in consideration of such problems, and implements an energy management methodology that enables accurate optimization of energy efficiency.

Means to Solve the Problem

In an aspect of the invention, an energy management method includes identifying a target of energy management; monitoring a time-transitionable status of the target of energy management; and defining at least one estimate model to estimate the quantity of energy consumption and the quantity of energy conversion associated with at least one status of the target of energy management, and the energy consumption and the energy conversion being caused by operation of the target of energy management.

In another aspect of the invention, defining the estimate model includes defining a plurality of the estimate models associated with each of a plurality of different statuses of the target of energy management.

In another aspect of the invention, the method further includes estimating, based on the plurality of estimate models, the quantity of energy consumption and the quantity of energy conversion, the energy consumption and the energy conversion being caused by operation of the target of energy management.

In another aspect of the invention, the target of energy management facilities (described below) includes a device, an instrument, an apparatus, an equipment, a facility, a process line, facilities and a factory.

In another aspect of the invention, the method further includes: dividing the target of energy management into a plurality of boundaries, wherein monitoring the time-transitionable status includes monitoring at least one time-transitionable status of the plurality of boundaries, and defining the estimate model includes defining at least one estimate model associated with at least one status of the boundaries.

In another aspect of the invention, the method further includes correcting the estimate model, based on at least one actually measured value of the quantity of energy consumption and the quantity of energy conversion of each of the plurality of different statuses.

In another aspect of the invention, correcting the estimate model includes selecting one of permissibility and impermissibility to perform automatic estimate model correction; and storing of a plurality of histories of the estimate model corrections to enable selection of pre-correction version of the estimate model.

In another aspect of the invention, the estimate model associated with one status of facilities is defined in article name.

In another aspect of the invention, the estimate model is a compound model that is synthesized by an association between two or more boundaries of different facilities.

In another aspect of the invention, an energy management apparatus includes: a monitoring unit configured to measure the actual quantity of energy consumption and the actual quantity of energy conversion of a target of energy management that either consumes or converts energy by its operation, and to monitor a time-transitionable status of the target of energy management; an estimate model definition unit configured to define at least one estimate model to estimate the quantity of energy consumption and the quantity of energy conversion, the energy consumption and the energy conversion being caused by operation of the target of energy management associated with at least one status of the target of energy management; an estimate model storage unit configured to store the estimate model; and an estimate model correction unit configured to correct and store the estimate model stored in the estimate model storage unit, based on the quantity of energy consumption and the quantity of energy conversion, the energy consumption and the energy conversion being caused by operation of the target of energy management.

In another aspect of the invention, the monitoring unit is configured to measure each a quantity of energy consumption and a quantity of energy conversion of a plurality of boundaries generated by dividing the target of energy management and to monitor each time-transitionable status of the plurality of boundaries; the estimate model definition unit is configured to define at least one estimate model to estimate a quantity of energy consumption and a quantity of energy conversion, the energy consumption and the energy conversion being caused by operation of each of the plurality of boundaries associated with at least one status of each of the plurality of boundaries; and the estimate model correction unit is configured to correct the estimate model based on the quantity of energy consumption and the quantity of energy conversion, the energy consumption and the energy conversion being caused by operation of each of the plurality of boundaries, and to store the estimate model in the estimate model storage unit.

In another aspect of the invention, an energy management system GUI method, includes: identifying a plurality of targets of energy management from among energy generation facilities, energy allocation facilities, and energy demand facilities; monitoring a time-transitionable status of the targets of energy management; defining an estimate model associated with one status of the targets of energy management; and estimating, based on the defined estimate model, a quantity of energy consumption and a quantity of energy conversion, the energy consumption and the energy conversion being caused by operation of the targets of energy management; displaying first and second boundaries in association with one another, the first boundary including the energy demand facilities and the second boundary including at least one of the energy generation facilities and the energy allocation facilities.

In another aspect of the invention, displaying the first and second boundaries includes displaying first-order information of a past facilities energy value, and second-order information, which is processed or generated based on the first-order information, the first-order information and the second-order information distinguished from each other.

In another aspect of the invention, displaying the first and second boundaries includes displaying discriminately a first display/operation window screen handling only the first-order information and a second display/operation window screen handling only the second-order information.

In another aspect of the invention, displaying the first and second boundaries includes displaying the status in the form of a dynamic state transition diagram.

In another aspect of the invention, the dynamic state transition diagram is a hierarchically structured bubble chart with correspondence to facilities within boundaries of the targets of energy management.

In another aspect of the invention, the bubble chart includes bubbles performing input definition and/or output display associated with each of the facilities statuses that transition along the time axis, caused by operation of the target of energy management; a state transition route providing a connection between arbitrary bubbles and specifying a transition path between facilities statuses, wherein the state transition route defines, as a boundary condition, a state during transition between the arbitrary facilities statuses.

In another aspect of the invention, the target of energy management operates based on production schedule information. The energy management system GUI method further includes estimating the quantity of energy consumption and the quantity of energy conversion in the future, based on the estimate model and the production schedule information.

In another aspect of the invention, an energy management system, includes energy management facilities being operable based on a production schedule and consuming and converting energy by operation; a monitoring unit configured to monitor the time-transitionable status, the quantity of energy consumption, and the quantity of energy conversion of the energy management facilities; an external information input unit configured to obtain and output external information; and an energy management apparatus configured to manage the quantity of energy consumption and the quantity of energy conversion of the energy management facilities, based on the external information, wherein, in the energy management system: the energy management apparatus includes a production schedule information storage unit that stores the production schedule information, a facilities information storage unit that stores facilities information of the energy management facilities, an external fluctuation factor information storage unit that stores the external information obtained by the external information input unit, a facilities actual performance value storage unit that receives as facilities actual performance values from the monitoring unit and stores a quantity of energy consumption and a quantity of energy conversion of the energy management facilities, a boundary setting unit configured to divide targets of energy management into a plurality of boundaries, an estimate model definition unit configured to define a plurality of estimate models to estimate a quantity of energy consumption and a quantity of energy conversion associated with at least one status in each of the plurality of boundaries, based on the production schedule information, the facilities information, and the facilities actual performance value, an estimate model correction unit configured to correct the plurality of estimate models, based on the facilities actual performance value and the external information, and a GUI display unit configured to synthesize and display by a GUI the plurality of estimate models corrected by the estimate model correction unit.

In another aspect of the invention, the GUI display unit configured to estimate and display the quantity of energy consumption and the quantity of energy conversion in the future, based on the estimate models and the production schedule information.

Effect of the Invention

The present invention can optimize energy efficiency with high accuracy.

Brief Description of the Drawings

FIG. 1 is a block diagram showing an embodiment of an energy management system to which an energy management method according to the present invention is applied.
FIG. 2 is a flowchart describing the operational flow in FIG. 1.
FIG. 3 is a format example of a table input method.
FIG. 4 is a format example of a bubble chart input method.
FIG. 5A is an energy characteristic example drawing produced by the flowchart process illustrated in FIG. 2.
FIG. 5B is a drawing showing the relationship between the status change of facilities 1 along with time axis and the quantity of energy consumption.
FIG. 6A is a divided setting example drawing of a plurality of boundaries according to the present invention.
FIG. 6B is a divided setting example drawing of a plurality of boundaries according to the present invention.
FIG. 6C is a divided setting example drawing of a plurality of boundaries according to the present invention.
FIG. 7 is a drawing in which an operator, based on a production plan, assigns a facilities operation plan.

Best Mode for Carrying Out the Invention

An embodiment of the present invention will be described with reference drawings in detail as follow. The following description of an embodiment of the present invention is a specific description of the invention set forth in the attached claims and equivalents thereto, and is not for the purpose of restricting the present invention, which will be understood by a person skilled in the art, based on the content of the present disclosure.
In the following description, the term "energy," similar the definition in ISO 50001, refers to electricity, fuel, steam, heat, compressed air, and other similar media.
The term "facilities" is the collective name of physical space that is positioned as a target of energy management, this including, for example, a factory, various process lines installed within a factory; elemental parts constituting or associated with these process lines, instruments, apparatuses, and equipment in the narrow sense; and facilities installed within a factory, equipment in the narrow sense, instruments, and elements installed in a factory in a condition independent from these process lines.
The term "factory" is facilities (group) that manufacture products of a plurality of or a single brand, and is constituted by a plurality or a single process line and an energy supply facility/facilities supplying energy or the like thereto. Examples are a semiconductor factory and a petrochemical plant or the like.

A "facility" is a building or facilities made for a specific purpose. Examples are an energy supply facility within a factory and a printed circuit production facility or the like. In a printed circuit production facility, a single or a plurality of process lines are provided.

A "process line" is the unit of production producing products of a plurality of or a single brand, and is constituted by a series of facilities and apparatuses. Examples include an automotive assembly process line or the like. An "equipment" is a functional unit constituted by a plurality of or a single apparatus or instrument. Examples include a desulfurizing equipment or a heat sourcing equipment or the like.

"Apparatus" is a collection of mechanisms having a given function. Examples include a semiconductor production apparatus or the like.

An "instrument" is the collective name for fixtures, machines, and mechanisms. Examples include motors, pumps, and the like.

"Devices" are apparatuses and fixtures having a specific function. They are used as the constituent elements of facilities and instruments. Example includes stream flow sensors, valves, and the like.

A "boundary" is an arbitrary closed space that can establish facilities in the broad sense as a target of energy control. That is, the establishment of a part of the above-described facilities in the broad sense, for example, a part of a factory, as a target of energy management is referred to as a boundary. The quantity of energy consumption and the quantity of conversion of a target of energy management established by a boundary are managed. These boundaries can be freely defined and changed, and can be the target of estimate models by software equations. Such equation models can synthesize a plurality of equation models, and can be made into a hierarchy by division into a plurality of equation models depending upon the object of energy management.

While a major object of energy management is the effective usage of energy, there are detailed objects such as discovery of and countermeasures with respect to the wasteful use of energy, management of and countermeasures with respect to not meeting a target for energy efficiency in units of facilities (groups) or boundaries, prediction of a quantity of consumption for the purpose of energy procurement planning, and management of and countermeasures with respect to energy efficiency for each production brand.

In the present invention, depending upon the object of dealing with energy, facilities related to energy use are classified as energy demand facilities, and facilities related to energy supply are classified as energy supply facilities.

A factory is a typical example of energy demand facilities. A factory can be divided into a hierarchy in units of constituent elements. For example, it can be treated as a collective model in which boundaries in units of apparatuses, equipment, facilities (in a narrow sense), and lines are established.

In general, in energy efficiency management in energy demand facilities such as a factory, energy demand facilities are divided into a plurality of boundaries (sub-facilities) of an appropriate number. Then, for each of the sub-facilities or group of sub-facilities, energy efficiency management is performed. In addition energy efficiency management is performed in units of organization and units of buildings. In setting the boundaries, the quantity of energy consumption and ease of measurement are considered. In general, prominent energy-consuming facilities such as an electric furnace are positioned as the target for focused management among energy demand facilities, and it is considered best to perform energy management thereof as a category separate from other facilities on an assembly line or the like. That is, treating prominent energy-consuming facilities such as an electric furnace as a boundary in a different category enable efficient energy management.

Energy management requires measurement and analysis, and for this reason incurs costs. For this reason, from the standpoint of recovering investments, it is rational to gradually expand the scope of management, starting with facilities having large energy consumption and facilities for which large improvement can be made in energy efficiency.

In contrast, there are so-called BTGs (boilers, turbines, and generators) that are typical energy supply facilities. Many energy demand facilities use the output from BTGs that are energy supply facilities, that is, stream, electrical power and the like, as drive power source for production, diriving, and operation. In energy supply facilities as well, similar to energy demand facilities, arbitrary boundaries can be established by dividing boundaries in a hierarchal manner. The object of energy supply facilities is the conversion of energy. For example, the conversion of fuel to steam and electrical energy is performed.

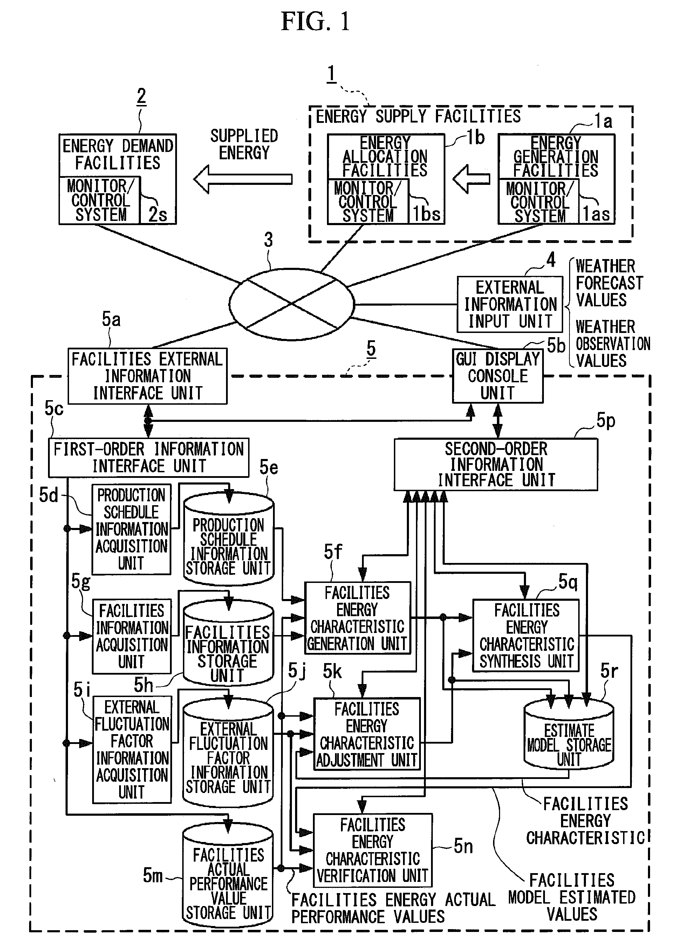

FIG. 1 is a block diagram showing an embodiment of an energy management system to which the energy management method of the present invention is applied. In FIG. 1, the energy supply facilities 1 have energy generation facilities 1a that generate energy, and energy allocation facilities 1b that distribute energy generated by the energy generation facilities 1a to energy demand facilities 2.

The energy generation facilities 1a have a monitor/control system 1as for the purpose of monitoring and controlling so that the energy generation facilities 1 a operate appropriately, in accordance with the operation settings and operation conditions. The energy allocation facilities 1b have a monitor/control system 1bs for the purpose of monitoring and controlling so that the energy allocation facilities 1b operate appropriately, in accordance with the operation settings and operation conditions. The energy demand facilities 2 have a monitor/control system 2s for the purpose of monitoring and controlling so that the energy demand facilities 2 operate appropriately, in accordance with the operation settings and operation conditions. The monitor/control systems 1as, 1bs, and 2s have sensors and control facilities suitable to the constitutions of each of the facilities.

The monitor/control systems 1as, 1bs, and 2s are connected via a communication network 3 to an external information input unit 4 and an energy management apparatus 5. Of the monitor/control systems 1as, 1bs, and 2s, ones that are close to the energy management apparatus 5 may be directly connected by a communication line separate from the communication network 3.

The external information input unit 4 has a service function that, for example, obtains weather data such as weather forecast values or weather observation values and supplies the weather data to the energy management apparatus 5 via the communication network 3. The function of the external information input unit 4 may be performed by any of the monitor/control systems 1as, 1bs, and 2s.

There are cases in which the characteristics of the energy supply facilities 1 and the energy demand facilities 2 are influenced by meteorological conditions such as temperature and humidity. The external information input unit 4 obtains and captures into the energy management apparatus 5 weather data such as weather forecast values or weather observation values. Using the weather data captured into the energy management apparatus 5, the relationship between the weather data and the quantity of energy consumption is modeled and analyzed.

The energy management apparatus 5 is, for example, constituted by at least one personal computer or workstation or the like. The energy management apparatus 5 has functions such as an interface function, a display/operation function, and a function that obtains, generates, manages, verifies, adjusts, and stores various information.

The energy management apparatus 5 has facilities/external information interface unit 5a, a GUI display console unit 5b, a first-order information interface unit 5c, a production schedule information acquisition unit 5d, a production schedule information storage unit 5e, facilities energy characteristic generation unit 5f, facilities information acquisition unit 5g, facilities information storage unit 5h, an external fluctuation factor information acquisition unit 5i, an external fluctuation factor information storage unit 5j, facilities energy characteristic adjustment unit 5k, facilities actual performance value storage unit 5m, facilities energy characteristic verification unit 5n, a second-order information interface unit 5p, facilities energy characteristic synthesis unit 5q, and an estimate model storage unit 5r.

In the energy management apparatus 5, the facilities external information interface unit 5a has an input/output function that performs exchange processing of various information between the energy management apparatus 5 and external devices and the like, via a communication network 3. The facilities external information interface 5a is connected to a GUI display console unit 5b that has a function that handles input of operations from an operator and a function that displays to the operator. The facilities external information interface unit 5a is connected also to the first-order information interface 5c.

The GUI display console unit 5b has a display function and an operation interface function that use a GUI. The GUI display console unit 5b, for example, in making a window display, by a comprehensive display within a single window, or providing a common design or color scheme in display frames even with multiple windows, can impart consistency to the display function and the operation interface function.

The production schedule acquisition unit 5d is connected to the first-order information interface unit 5c. The production schedule storage unit 5e is connected to the production schedule acquisition unit 5d. The production schedule storage unit 5e is connected to the facilities energy characteristic generation unit 5f (estimate model definition unit).

The production schedule information acquisition unit 5d uses a communication function to capture production schedule information that includes production information such as brands and schedule information stored in an external server (not shown) into the energy management apparatus 5 and store them into the production schedule information storage unit 5e. The production schedule information may be directly input by the operator via the GUI display console unit 5b.

The facilities information acquisition unit 5g is connected to the first-order information interface unit 5c. The facilities information storage unit 5h is connected to the facilities information acquisition unit 5g. The facilities information storage unit 5h is connected to the facilities energy characteristic generation unit 5f.

The facilities information acquisition unit 5g obtains facilities information (information of facilities within a boundary) stored in an external server (not shown). The facilities information acquisition unit 5g also directly obtains facilities information from a target of energy management. The facilities information acquisition unit 5g also obtains facilities information recorded, edited, and deleted and the like by the operator operating the GUI display console unit 5b. The facilities information obtained by the facilities information acquisition unit 5g is stored in the facilities information storage unit 5h. The facilities information refers to information regarding each of facilities, and is general facilities information (name, model name, function, specifications, and the like).

The external fluctuation factor information acquisition unit 5i is connected to the first-order information interface unit 5c. The external fluctuation factor information storage unit 5j is connected to the external fluctuation factor information acquisition unit 5i. The external fluctuation factor information storage unit 5j is connected to the facilities energy characteristic adjustment unit 5k and the facilities energy characteristic verification unit 5n.

The external fluctuation factor information acquisition unit 5i stores into the external fluctuation factor information storage unit 5j as external fluctuation factor information external information input to the external information input section 4, for example, weather data obtained as described above.

Additionally, the facilities actual performance value storage section 5m is connected to the first-order information interface unit 5c. The facilities actual performance value storage unit 5m is connected to the facilities energy generation unit 5f, the facilities energy characteristic adjustment unit 5k, and the facilities energy characteristic verification unit 5n.

The monitor/control systems 1as, 1bs, and 2s obtain monitoring information. The monitoring information is information obtained by the monitor/control systems 1as, 1bs, and 2s monitoring the energy generation facilities 1a, the energy allocation facilities 1b, and the energy demand facilities 2. The facilities actual performance value storage unit 5m receives monitoring information obtained by the monitor/control systems 1as, 1bs, and 2s and stores them as facilities energy actual performance data of the target of management. That is, the quantity of energy consumption of facilities or within boundaries is collected in the facilities actual performance value storage unit 5m.

The production schedule information storage unit 5e stores production schedule information. The facilities information storage unit 5h stores facilities information. The external fluctuation factor information storage unit 5j stores external fluctuation factor information. The facilities actual performance value storage unit 5m stores facilities energy actual performance data. As a rule, the production schedule information stored in the production schedule information storage unit 5e, the facilities information stored in the facilities information storage unit 5h, the external fluctuation factor information stored in the external fluctuation factor information storage unit 5j, and the facilities energy actual performance data stored in the facilities actual performance value storage unit 5m are actual performance data that have been captured via the facilities external information interface unit 5a and stored before processing and, as seen from the GUI display console unit 5b, are classified as information belonging to the primary information interface unit 5c.

Next, the constituent elements accessed via the second-order information interface unit 5p will be described. Second-order information, rather than being first-order information such as actual facilities information or measured values from sensors, is information indicating predicted values and/or estimated values and the like related to energy in each boundary that is a target in the present energy management apparatus. The various parts connected to the second-order information interface unit 5p will be described below.

The facilities energy characteristic generation unit 5f defines estimate models for each facilities group within a target range (boundary) for which an energy estimate model is defined. Specifically, based on the production schedule information stored in the production schedule information storage unit 5e, the actual facilities information stored in the facilities information storage unit 5h, and the actual facilities energy actual performance data stored in the facilities actual performance value storage unit 5m, the energy consumption characteristics and/or energy supply characteristics of each production brand and the facilities status (condition) are defined as estimate models for each of facilities, for example in the form of a table.

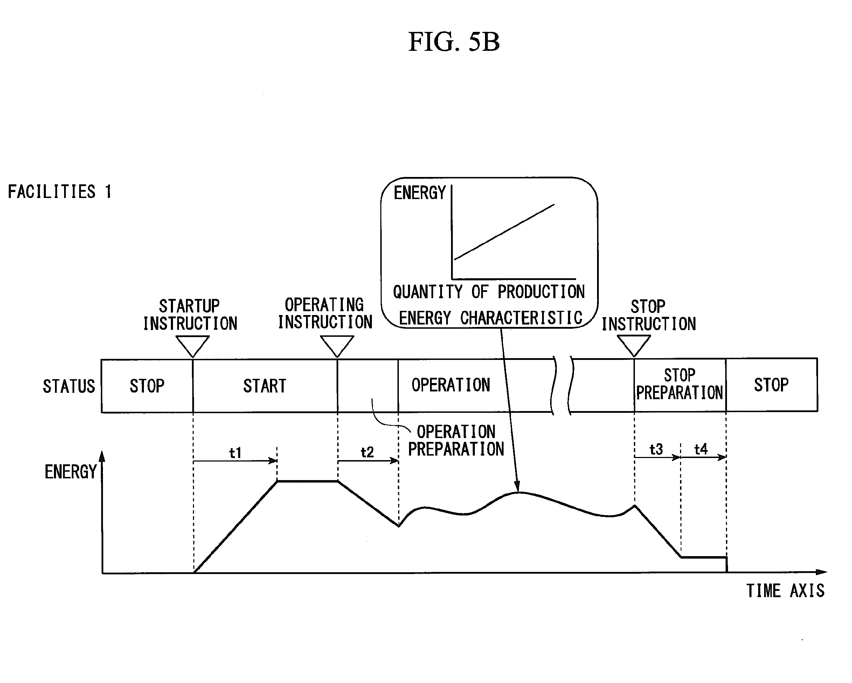

The facilities status (condition) is, for example, whether the facilities operating or stopped. Additionally, the operating status is divided into standby, starting up, production in progress, and shut-down. FIG. 5B shows examples of statuses.

In the case of facilities that produce a plurality of articles, the energy consumption characteristics for each produced brand is obtained by metering the quantity of energy consumption linked to the produced brand. It is possible to grasp the quantity of consumption of the brand finally produced from the factory broken down into constituent elements. The breaking down into constituent elements can be performed by the same method that is generally used for break-down into operation plans of facilities and apparatuses when proposing a production plan. Specifically, the finally produced brand is broken down into constituent elements such as constituent parts and raw materials and the like, and the amounts of consumption energy of the facilities actually producing each of the constituent elements are metered. In general, because the break-down into constituent elements and the metering of the quantity of energy consumption incur costs and require labor, giving consideration to the ratio of a produced brand with respect to the overall production of the factory, and the constitutional ratio of the quantity of energy usage of facilities groups involved in production, the actual metering range may be determined, and proportional division of other energy usage may be done using the ratio of the produced brand.

The estimate models that are defined in the facilities energy characteristic generation unit 5f may be defined based on characteristic information and the like described in catalogs of each of facilities. Also, the estimate models may be defined by automatic generation of an equation based on past actual performance values, having defined related variables. The past actual performance values, which are first-order information, can be obtained by referencing facilities energy actual performance values stored by the facilities actual performance value storage unit 5m. The function of automatic equation generation based on past actual performance values is effective also in the case of defining hypothesized energy characteristics in facilities for which it is not possible to obtain actual performance data, such as when there is no sensor or the sensor has failed.

The types of facilities energy characteristics include the energy conversion characteristic of the energy generation facilities 1a, the energy conversion characteristic of the energy allocation facilities 1b, and the energy consumption characteristic of the energy demand facilities 2, and each of these can be represented in tabular form.

The estimate models defined by and calculation results from the facilities energy characteristic generation unit 5f are stored in the estimate model storage unit 5r. The estimate models defined by the facilities energy characteristic generation unit 5f may also be input to the facilities energy characteristic synthesis unit 5q.

The facilities energy characteristic adjustment unit 5k has a function of correcting and adjusting estimate models for each produced brand and each facilities status stored in the estimate model storage unit 5r. That is, the facilities energy characteristic adjustment unit 5k is an estimate model correction unit. Specifically, the facilities energy characteristic adjustment unit 5k, based on the facilities energy actual performance data stored in the facilities actual performance value storage unit 5m and the external fluctuation factor information stored in the external fluctuation factor information storage unit 5j, corrects and adjusts an estimate model by determining an offset value of the estimate model and causing this to be reflected in the estimate model.

The correction and adjustment of an estimate model is performed by adjustment of the parameters within the estimate model. The parameters in an estimate model are refined using a statistical algorithm such as multiple regression and principle component regression or a known learning algorithm such as neural network. The parameter adjustment range can be arbitrarily selected within a pre-established boundary. One reason such parameter adjustment is required is that an estimate model (facilities energy characteristic) defined as an estimate model by the facilities energy characteristic generation unit 5f changes in accordance with the production conditions and operating conditions. An estimate model that is refined and/or adjusted is stored again in the estimate model storage unit 5r and is also input to the facilities energy characteristic synthesis unit 5q.

The facilities energy characteristic synthesis unit 5q synthesizes estimate models of facilities energy characteristics of facilities (groups) defined by the facilities energy characteristic generation unit 5f or this estimate model and an estimate model of facilities energy characteristics refined and/or adjusted by the facilities energy characteristic adjustment unit 5k.

That is, estimate models of facilities energy characteristics defined in units of individual facilities constituting each of facilities or in units of specified facilities groups are synthesized. The scope of synthesis can be arbitrarily established as a boundary. For example, with regard to all facilities constituting the energy generation facilities 1a, if the estimate models representing the facilities energy characteristics thereof are summed together, it is possible to model the overall consumed energy characteristics of the energy generation facilities 1a. In the same manner, with regard to all facilities constituting the energy allocation facilities 1b, if the estimate models representing the facilities energy characteristics thereof are summed together, it is possible to model the overall consumed energy characteristics of the energy allocation facilities 1b. With regard to all facilities constituting the energy demand facilities 2, if the estimate models representing the facilities energy characteristics are summed together, it is possible to model the overall energy consumed energy characteristics of the energy demand facilities 2. In this manner, it is possible to determine the quantity of energy consumption and/or the quantity of energy conversion of a process that is the combination of a plurality of facilities. However, it is not necessary to model all facilities, and if the boundaries are appropriately established and an overall factory is modeled by combining macroboundaries with boundaries corresponding to actual facilities, labor and cost are reduced and efficiency is achieved.

The synthesized estimate models are can be referenced from the GUI display screen of the GUI display console unit 5b as model estimate values of the facilities (or groups of facilities) within a boundary. The synthesized estimate models are also provided to the facilities energy characteristic verification unit 5n.

Also, with the flow of energy that is supplied, by establishing boundaries from the energy generation facilities 1a to the energy allocation facilities 1b, and then to the energy demand facilities 2, so as to straddle a plurality of facilities, it is possible to synthesize estimate models for facilities in an arbitrary sub-hierarchal level of different facilities.

For example, in the case of establishing a bounding that straddles between a plurality of facilities, crossing over each border between an energy generation facilities, an energy allocation facilities, and an energy demand facilities, the compound model that is generated is a demand-and-supply collaboration type. This demand-and-supply collaboration type (RENKEI Type) of model is effective as an evaluation means in collaboration control between facilities, with the object being an improvement in the energy efficiency. This is because it is possible to perform overall optimization that straddles across facilities with regard to the form of energy consumption.

The facilities energy characteristic verification unit 5n makes a comparison under the same conditions, with the external fluctuation factor information stored in the external fluctuation factor information storage unit 5j, the facilities energy performance data of the target of energy management stored in the facilities actual performance value storage unit 5m, and the energy characteristic estimate model synthesized by the facilities energy characteristic synthesis unit 5q as the input. That is, a comparison is performed with the conditions actually used for operation, for example, with the conditions of the energy actual performance data. By doing this, the facilities energy characteristic verification unit 5n calculates the difference amounts of each of the quantity of energy generation, the quantity of allocation, and the quantity of consumption. For example, in the case in which something is done on the demand side to improve the energy efficiency, the difference between the quantity of energy consumption output by the estimate model made in the status before that was done and the actual quantity of consumption is taken as the quantity of energy reduction. The facilities energy characteristic verification unit 5n also has a function of performing diagnosing the operating condition of each of the current facilities, using KPI monitoring, which will be described later.

The GUI display console unit 5b, via the second-order information interface 5p, operates the facilities energy characteristic generation unit 5f, the facilities energy characteristic adjustment unit 5k, the facilities energy characteristic synthesis unit 5q, the facilities energy characteristic verification unit 5n, and the estimate model storage unit 5r. These five constituent elements are provided for the purpose of handling information such as multiply processed and re-re-generated prediction information, based on past actual performance values and on production plan and weather conditions, which are first-order information obtained via the facilities external information interface unit 5a, this information being second-order information.

The GUI display screen of the GUI display console unit 5b displays, for example, a comprehensive display of collected second-order information within a single window, or a common design or color scheme in display frames even with multiple windows, thereby enabling the imparting of consistency to the display and operation. It is therefore possible to systematically divide the GUI display screen that handles the second-order information from the above-described GUI display screen handing the first-order information. This enables a clearcut distinction between the GUI display screen that handles the second-order information from the above-described GUI display screen handing the first-order information, thereby the convenience of operation and discrimination is improved. For example, if a pop-up window is output on the GUI display screen as an alarm or information notification, it is possible to immediately distinguish by the window frame design or color scheme whether the notification is derived from the first-order information interface 5c or from the second-order information interface 5p.

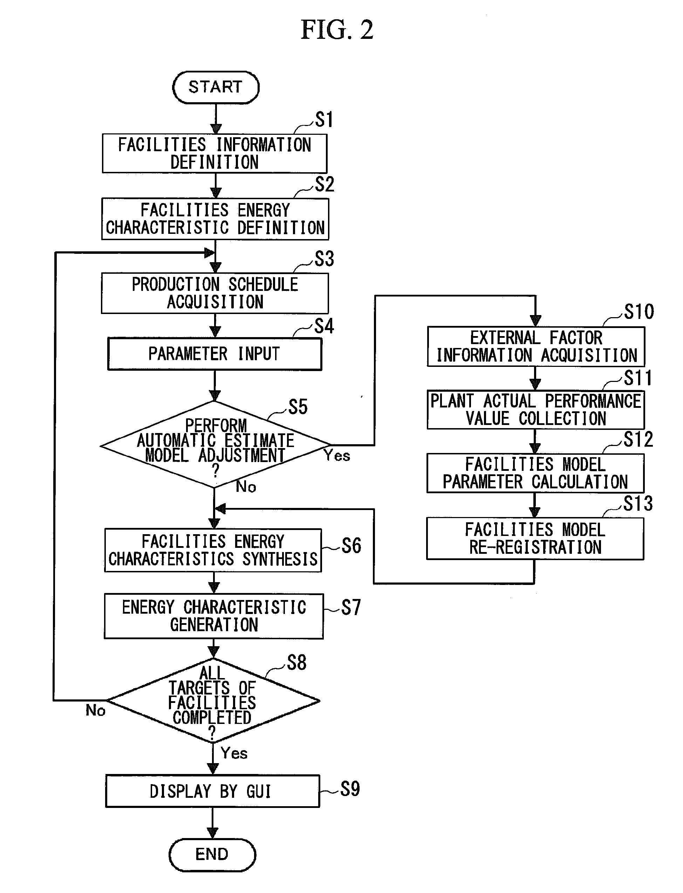

FIG. 2 is a flowchart describing the operational flow in FIG. 1.

First, in step S1, the operator, via the setting GUI screen provided in the GUI display console 5b, defines the facilities that are to be targets of energy management. The setting GUI screen is provided in the GUI display console unit 5b, and is for the purpose of graphically defining the scope of facilities to be included in one group, that is, the above-described boundaries. The setting GUI screen is used to record, change, and delete facilities names, operating statuses, and time scheduling and the like. By this definition function, a time chart for each of facilities, each produced article, and each operating status is completed.

Next, at step S2, the operator defines the facilities energy characteristic. Specifically, in accordance with the time charts for each of facilities, brands, and statuses defined at step S1, the energy consumption characteristics and energy supply characteristics for each status are defined.

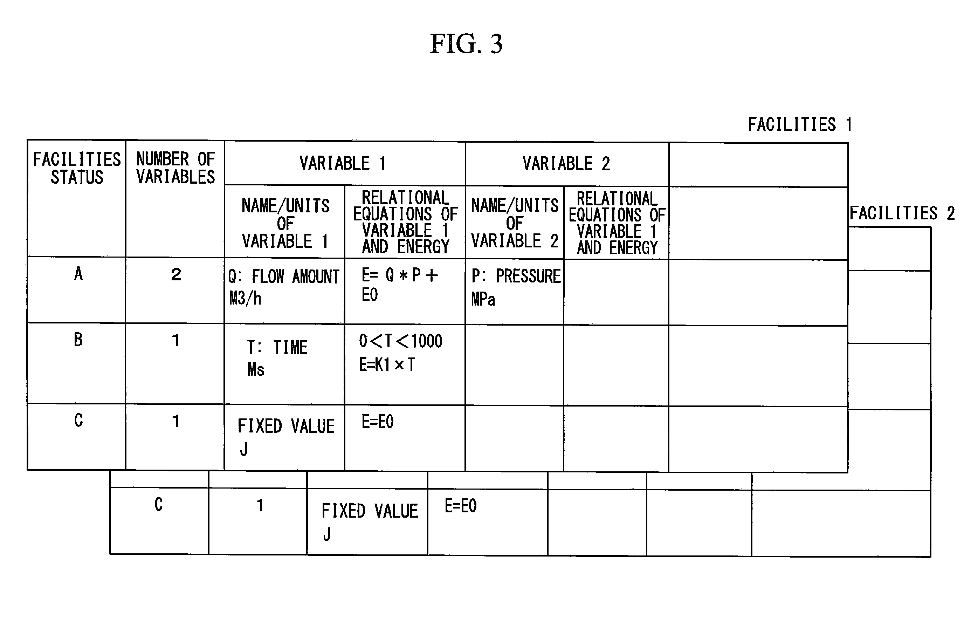

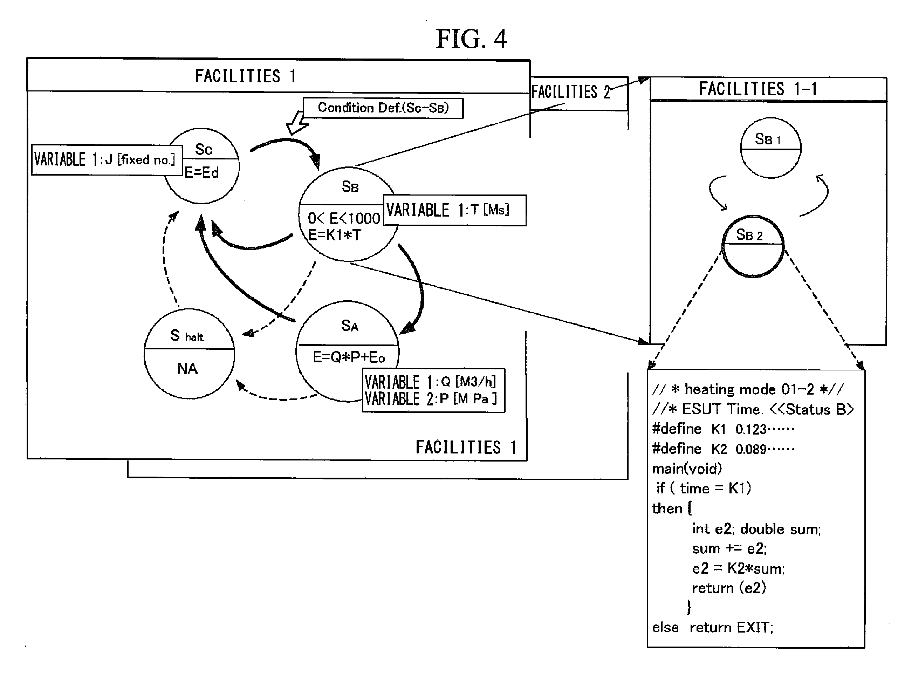

Methods that can be envisioned for defining the facilities energy characteristic include the table input method shown in FIG. 3, and the bubble chart input method by the state transition chart shown in FIG. 4. In the following description, the boundaries are treated as being individual facilities.

FIG. 3 shows the facilities energy characteristics of facilities (boundaries) constituting the energy demand facilities 2 in the form of a two-dimensional matrix setting table. There is a setting table for each of facilities. FIG. 3 shows the display of the setting table for facilities 1, below which is the setting table for facilities 2. The vertical direction in the setting tables represents the statuses A to C of the facilities. The horizontal direction in the setting tables represents the names of variables and units corresponding to each of the statuses A to C and equations relating each variable to energy.

FIG. 4 is a representation of the facilities energy characteristics of facilities constituting the energy demand facilities 2, represented as a hierarchal bubble chart. By a dynamic state transition GUI, it is possible to define (input) and display (output) each status of the facilities more dynamically.

The bubbles SA, SB, and SC in FIG. 4 each correspond to the facilities statuses A, B, and C defined in the setting table of facilities 1 shown in FIG. 3. It shows that the bubble SB is hierarchically defined. The bubble Shalt that is not in FIG. 3 defines the stopped condition because of an abnormality or ongoing maintenance of the facilities 1. Using variables, equations, logical notation ("if then else" and the like) defining bubbles corresponding to each status, it is possible to perform coding with regard to each facilities energy characteristic (demand, allocation, and generation). Bubble chart input, in contrast to table input, has the advantage of being able to define routes of state transitions between each of the facilities statuses and with regard to boundary conditions. For example, in FIG. 4, "Condition Def. (SC-SB)" is an example of defining the status with regard to the period of time of transition from the facilities status B to the facilities status C.

In the GUI method of either the table display shown in FIG. 3 or the bubble chart display shown in FIG. 4, for the same bounding and the same logical notation, mutual conversion is possible with respect to the treatment of input sections and/or display sections on the GUI interface.

By using these input and display sections, it is possible to define, for example, the following each information, in facilities energy characteristics (estimate models), for each of facilities and each of facilities statuses.

- Number of variables
- Variable names and units

- Number of parameters
- Parameter names and units
- Relational equation with energy (variables, parameter)
- Existence or non-existence of automatic parameter adjustment
- Automatic parameter adjustment conditions (a plurality of conditions such as brand, fixed period, and condition agreement can be selected)
- Actual performance value acquisition time period

Based on the information defined at step S1 and step S2, it is possible to define, in association with the status of the facilities, the energy consumption characteristics and energy supply characteristics of each of facilities and each produced brand.

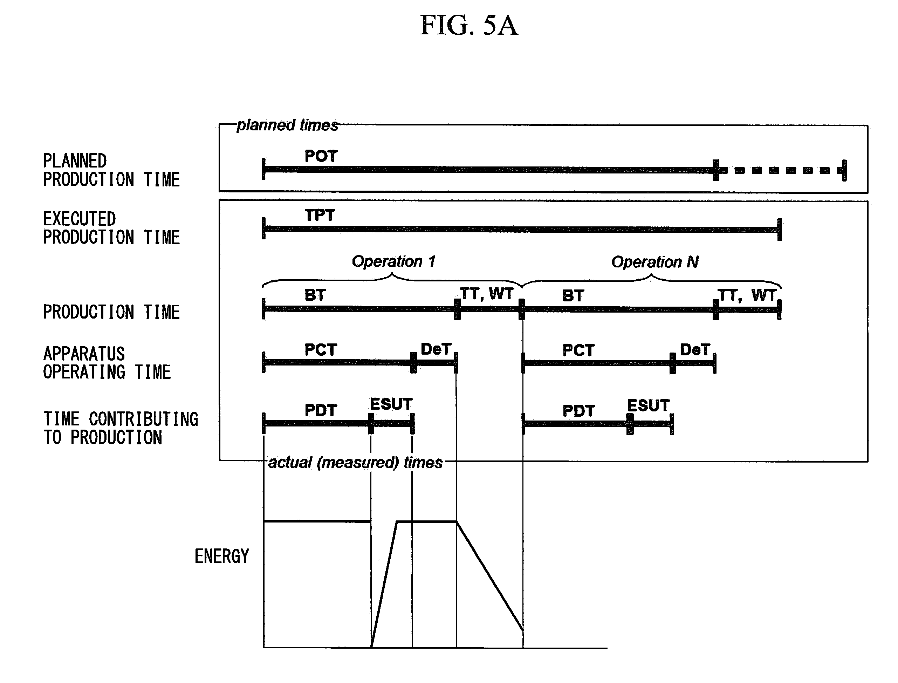

FIG. 5A is an energy characteristic example drawing derived from them. FIG. 5A shows the energy characteristics for each status. The horizontal axis is the time axis. The five statuses illustrated in FIG. 5A are, from the top, "planned production time," "executed production time," "production time," "apparatus operating time," and "time contributing to production."

The constitution of each of the times is defined as follows.

Planned production time (POT: Production order time/order duration): the production time set in the production plan beforehand.

Executed production time (TPT: Throughput time/execution time): Time of production activity, from the start of production until the end of production.

Production time (BT: Busy time): Time consumed in one production operation (lot).

Apparatus operating time (PCT: Process time): The apparatus operating time, regardless of the output.

Time contributing to production (PDT: Production time/Main usage time): Time for production of output that becomes product.

Apparatus setup time (ESUT: Effective setup time): Time for setup of an apparatus for production.

Transportation time (TT: Transportation time): Time for transport between apparatuses or from a warehouse.

Waiting time (WT: Wait time/Set aside time): Set aside time and time waiting for transportation to the next process.

Delay time (DeT: Delay time): Time an apparatus is stopped because of failures and defects.

Additionally, the mutual relationships between the above are as follows.

$$\text{Executed production time TPT} = \Sigma \, (\text{Production time BT} + \text{Transportation time}$$
$$\text{TT} + \text{Waiting time WT})$$

$$\text{Production time BT} = \text{Apparatus operating time PCT} + \text{Delay time DeT}$$

$$\text{Apparatus operating time PCT} = \text{Time contributing to production PDT} +$$
$$\text{Apparatus setup time ESUT}$$

During the time contributing to production PDT there are cases in which there is a proportional increase in the quantity of energy consumption in accordance with the quantity of production (heat source apparatuses and the like) and those in which it is constant (heating furnace or the like), this being established by the characteristic of boundary. The apparatus setup time ESUT is the status in which facilities (group) are started up from the completely stopped condition, during which the quantity of energy consumption gradually increases with the elapse of time. The delay time DeT is the status in which an apparatus is temporarily stopped because of failure or maintenance, this indicating an example in which there is a large energy consumption such as when in production. Depending upon the facilities, there are many cases in which, after a temporary stop, the consumed energy gradually decreases until a given amount of time elapses, after which it decreases to the energy in the standby condition. The transportation time TT and the waiting time WT is the status in which preparation work is done to change to the production of a different lot, the quantity of energy usage decreasing with the elapse of time, until ultimately the quantity of energy usage in the standby condition is reached.

In this manner, a model of the facilities energy characteristics, associated with a plurality of variables and parameters related to the status for each of facilities is referred to as an estimate model or an energy baseline model. In the following description, the term energy baseline model will also be used. By inputting various variables, the estimated energy amount for facilities before an improvement or for the ideal condition or the like is determined.

FIG. 5B shows the relationship between the change in status of the facilities 1 along the time axis and the quantity of energy consumption. The horizontal axis in FIG. 5B is the time axis. The facilities 1 in FIG. 5B are one that manufactures a product of a single brand. The facilities 1 receive a startup instruction and start, and go into the operating status after going through operation preparation after an operation instruction, and then stop upon receiving a stop instruction after going through preparation for stopping. The energy consumed when this occurs rises to the rated energy at time t1 after the startup instruction, and remains in that state until an operation instruction. After an operation instruction, the operation capacity is reduced in accordance with the required quantity of production over the time t2, and the energy also is reduced accordingly. After that, operation starts. During operation, energy is consumed in proportion to the amount of production by the energy characteristics as shown in the graph of FIG. 5B. When a stop instruction is received, the capacity is linearly reduced, and the energy also decreases. Further, after the time t4 of small energy usage, there is a complete stoppage.

When facilities production products of a plurality of articles, there are cases in which the energy characteristics will differ for each article. For example, in the case of placing material in a heating furnace to heat it, the temperature rise pattern will differ for each article. In such cases, energy characteristics of operational status should be defined by each article. With regard to startup and stopping of the facilities as well, if the characteristics differ between articles, either there is division between each article for the startup characteristics, or all statuses are managed differently, with the facilities and the article taken as a set.

The use of a method such as this enables automatic adjustment conditions for model parameters to be given to each of facilities and each status. For example, therefore, it is possible to update only the models of facilities that have been subjected to maintenance, or to perform partial updating of estimate models for model adjustments of only some given produced article, this being an advantage, not only in improving prediction accuracy of energy consumption, but also in saving calculation processing resources.

Returning to FIG. 2 to continue the description, next at step S3, the operator obtains production schedule information from an external system server (not shown) connected to the target energy management apparatus 5. The production schedule information is the production plan for each of facilities in the form of data and, based on the production schedule information, the production schedules for articles and production amounts in each of facilities are determined. The obtained production schedule information is, for example, described as time-series information for produced articles and production amounts approximately one day or one week into the future, and is stored in the production schedule information storage unit 5e.

At step S4, the operator inputs the process variables (for example, header pressure P and intake temperature T) used and equation parameters defined at step S3.

Then, at step S5, the operator verifies whether or not automatic estimate model adjustment is to be done and, if there is no automatic adjustment, processing transitions to step S6, but if there is automatic adjustment, transition is made to the process of step S 10 and thereafter.

At step S6, in the case in which a plant is divided into a plurality of boundaries (facilities (group)), the operator, by synthesizing the definitions of each of the partitioned boundaries (facilities (group)), can determine the overall plant energy consumption characteristics. The method of synthesis will be described later.

At step S7, the energy management apparatus collects the quantity of energy usage actual performance values from the monitor/control system of the boundary (facilities (group)) that is the target of energy management and makes a comparison with the estimated energy consumption derived from the energy baseline model, generating the difference therebetween as the KPI (energy efficient index). The KPI is not restricted to this, and other candidates can be envisioned.

At step S8, the energy management apparatus repeatedly executes the processing of step S3 to step S7 until all of the boundaries (facilities (group)) defined as targets of energy management have been completed.

Then, at step S9, the energy management apparatus displays on the display screen of the GUI display console 5b the KPI calculation results for all the boundaries (facilities (group)) in step S7.

At step S5, the energy management apparatus, in the case in which automatic estimate model adjustment is required, the external factor information is first obtained at step S10. In defining the facilities energy characteristics at step S2, because not only plan information, but also the case in which weather conditions (temperature, humidity, and the like) are variables is considered, the energy management apparatus collects as external factor information, for example, the forecast and actual values of the weather from the external information input unit 4.

Then, at step S11, the energy management apparatus obtains the plant information actual performance values defined by the facilities energy characteristics.

At step S12, the energy management apparatus uses the actual performance values of step S10 and step S11 to automatically calculate the parameters defined as the facilities energy characteristics. The actual performance values used in the calculation are the variables defined at step S2.

The automatic parameter calculation can be done using various algorithms. An example of a parameter derivation method using multiple regression, which is a type of multivariate regression method, will be described below.

The time band of the elapsed time after a change of status of the k-th data with respect to an arbitrary facilities status is taken as i (immediately after the change of status is set to zero) and the energy consumption estimate value of the facilities at that time is taken as Y(k,i). Y(k,i) is assumed to be calculable by the linear linkage of N actually measured data shown by Equation (1).

$$Y(k,i) = \sum_{n=1}^{N} \{\alpha\, n(i) \bullet Xn(k,i)\} \qquad (1)$$

In the above, $\alpha n(i)$ is a partial regression coefficient and Xn(k,i) is the n-th observed for the purpose of calculating Y(k,i). If Equation (1) and the N $\alpha n(i)$ and Xn(k,i) are given beforehand, the value estimated by the calculation of Equation (1) is taken as mY(k,i). If the observed actual performance value observed in the i-th time band of the k-th time is taken to be Y(k,i) and the sum of the squares in the learning period of the approximation error of the estimated value with respect to the actual performance value in the i-th time band is taken to be Qi, we obtain Equation (2).

$$Qi = \sum_{k=1}^{K} \{mY(k,i) - Y(k,i)\}^2 \qquad (2)$$

In order to determine the $\alpha n(i)$ that minimizes the sum of the squares Qi error, by taking the partial differentiation of both sides of Equation (2) with $\alpha i(i)$ and setting this to zero and substituting Equation (1) into Y(k,i), we obtain the following equation.

$$\sum_{m=1}^{N} \alpha\, n(i) \bullet \sum_{k=1}^{K} Xn(k,i) \bullet Xm(k,i) = \sum_{k=1}^{K} Xn(k,i) \bullet Y(k,i) \qquad (3)$$

In the above n=1, 2, 3, ... N.

It is possible to solve the N simultaneous equations of Equation (3) for each time band i to determine the partial regression coefficients $\alpha n(i)$.

If the energy characteristics of a process exhibit non-linearity, the model can be made non-linear by using non-linear regression.

Using the time after a change in a facilities status in this manner, it is possible to adjust the model parameters for each time band separately, so as to obtain energy usage estimated values based on actual past values.

This enables automatic readjustment of the model parameters at a given timing, and enables the tracking of a model to variations in production and production conditions. It is also possible to estimate, based on the production schedule information, the future quantity of energy consumption or energy conversion.

Next, at step S13, the energy management apparatus re-registers the estimate model parameters calculated at step S12 into the estimate model storage unit 5r. Because a history of corrections is held in the estimate model storage unit 5r, the estimate model can be returned to any arbitrary state. Alternatively, it is possible to use a pre-established estimate model.

When the processing of step S 13 is completed, transition is made to step S6.

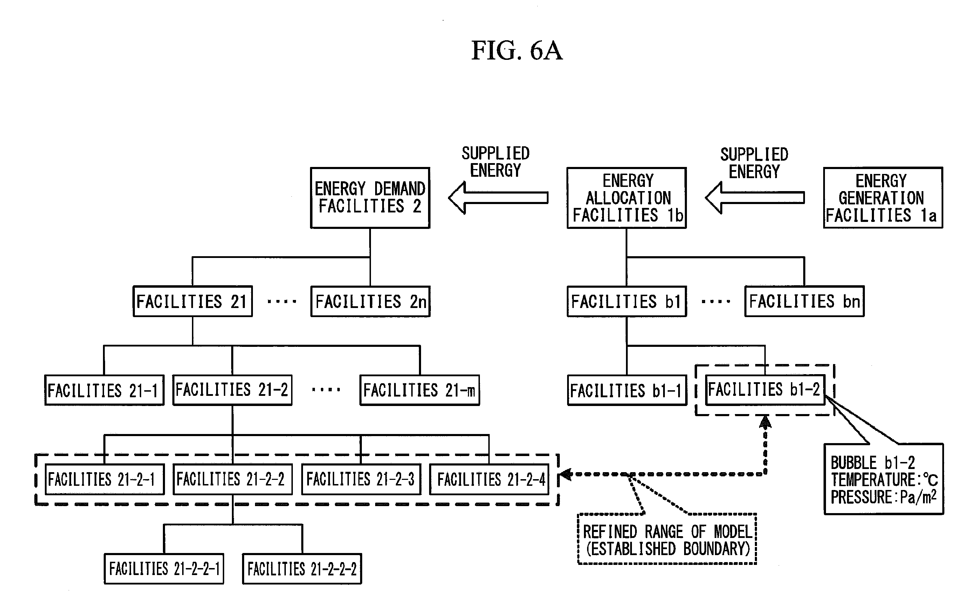

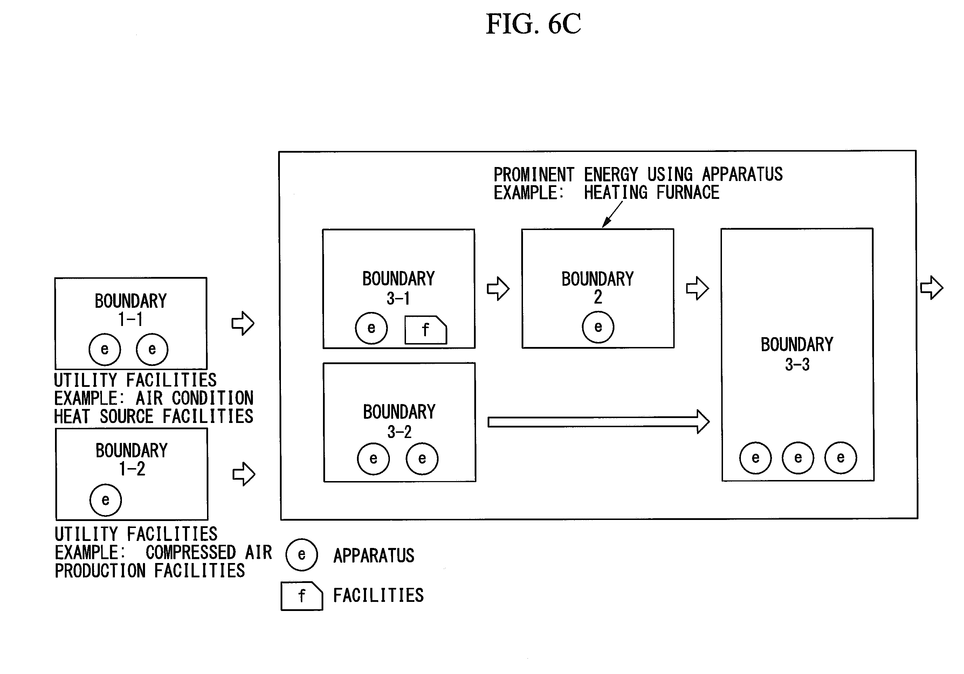

FIG. 6A is a divided setting example drawing of a plurality of boundaries based on the present invention, in which parts that are in common with FIG. 1 are assigned the same reference numerals. FIG. 6A describes the interface of the facilities energy characteristic generation unit 5f of FIG. 1. Facilities are divided hierarchically into a plurality of boundaries, each being taken as a target of energy management. Each boundary is constituted by a plurality of facilities constituent elements. In FIG. 6A, the energy allocation facilities 1b and the energy demand facilities 2 are made into a hierarchal tree structure of a plurality of facilities constituent elements. A specific boundary of the energy allocation facilities 1b (facilities b1-2) and specific boundaries of the energy demand facilities 2 (facilities 21-2-1 to facilities 21-2-4) are mutually associated with one another and displayed.

The energy generation facilities 1a may also be made into a hierarchal tree structure. Additionally, the specific boundary of the energy generation facilities 1a and the specific boundaries of the energy demand facilities 2 may be mutually associated and displayed.

In the break-down into a tree structure, it is preferable that the break-down be in a manner that matches the actual facilities constitution in the aspect of facilities management, and in the energy management aspect, the degree of break-down is determined based on ease of measurement and the size of the energy usage amount.

This enables an evaluation and judgment with regard to the time lag (delay in response time) by spread of the influence and quantitative degree of influence (responsiveness), the influence being caused by status variation (change) of either one to the other among energy allocation infrastructure 1b (and/or the energy generation infrastructure 1a) and the energy demand facilities 2.

Additionally, by synthesizing the boundaries of both the energy allocation facilities 1b (and/or the energy generation facilities 1a) and the energy demand facilities 2 as a compound model of demend-and-supply collaboration type, it is possible to perform energy management and demand-and-supply collaboration modeling that accommodate a wide-range boundary that straddles between the demand-and-supply facilities. From the standpoint of a collaboration and also complementary type that was not possible to achieve with an estimate model of just one of the energy allocation facilities 1b (and/or the energy generation facilities 1a) and the energy demand facilities 2, doing this can be expected to discover new energy efficiency improvement countermeasures.

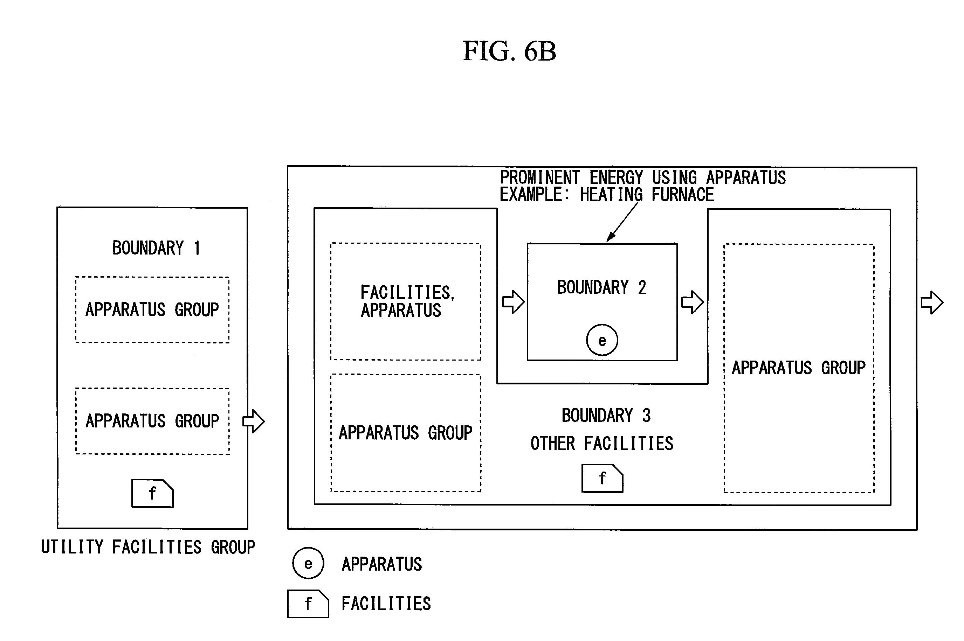

For example, in the case of performing energy management within a given factory, targets of energy management such as facilities within the factory are divided into a number of boundaries and are modeled by boundaries (sub-facilities and sub-facilities groups) and the energy efficiency is managed. The boundaries may be established so as to manage in units of organizations or buildings or the like. The boundaries may be established with consideration given to the energy usage amount and ease of measurement and the like. The management may be done at first for an overall building, and next management may be done divided between "prominent energy-consuming facilities" and "other" facilities. Specifically, for example, because the amount of energy used by a heating furnace is large, the apparatus is used as the boundary. In contrast, because the energy used in an assembly factory is relatively small, a group of apparatuses as a boundary can be managed in units of process lines. After an improvement in the energy efficiency of a heating furnace is completed, the assembly process boundary can be divided, after which a part having a large energy usage amount can be managed as a boundary, so as to conduct efficient management. FIG. 6B is an example of the initial boundary settings. There are three boundaries, boundary 1 being a utility facilities group, boundary 2 being a heating furnace, and boundary 3 being other production facilities. In the next step, boundary 1 is divided into two boundaries, and boundary 3 is divided into three boundaries. The arrows between the boundaries show the flow of objects and energy. Facilities and apparatuses are shown as being mixed inside boundaries.

When creating an estimate model that encompasses a plurality of facilities within an established boundary, two methods exist.

The first method is to focus on the individual facilities within a boundary and to code the input/output conditions of each, the outbound response conditions (behavior), the capacity range, the internal operation state (status) type and the definition thereof, the sequence and temporal nature of operation, information regarding energy measurement, and information regarding the measurement of variables related to energy individually, and to evaluate simultaneously each of the energy characteristics by performing parallel calculations taking these as a group of a plurality of independent estimate models. The span between calculated results from this group of estimate models and the actual values can be a means of extracting problems to solve in making improvements regarding local collaboration and linked conditions and the like between facilities within a boundary region.

The second method is to include information such as of individual facilities and apparatuses within a boundary, and also to code the input/output conditions when the outside is viewed from the overall boundary region, the outbound response conditions (behavior), the capacity range, the internal operation state (status) type and the definition thereof, the sequence and temporal nature of operation, information regarding energy measurement, and information regarding the measurement of variables related to energy and the like. That is, the overall established boundary is treated as being virtual single facilities in constituting (synthesizing) an estimate model.

For example, if as a result of utilizing the first method optimization within a boundary region is achieved to some degree, as the next step, switching to the second method and further expanding the scope of the target of energy management can be one method of achieving overall optimization. For example, raw materials and products are defined as input/output conditions with respect to the outside.

The relationship between raw materials and products in the case, for example, of heat sourcing facilities (group), is one in which the raw materials correspond to electrical energy or gas and the like, and the product corresponds to cold water or hot water. Cold water is used not only for air conditioning, but also as production cooling water. In the case of production robot facilities (group), parts being processed, electrical energy, or production cooling water correspond to the raw materials, and parts after processing correspond to the product. The products after processing are treated as the raw materials for the final assembly line. This type of relationship is described later.

The most effect way to optimize the energy efficiency is to perform energy management using an appropriate combination of the first method and the second method.

For example, because using only the first method involves too much cost and labor, it is not necessarily practical. Given this, in general, only facilities groups with regard to "prominent energy-consuming" are selected from within a boundary, and the first method is applied to only these facilities groups at each of the facilities. The second method is applied to the many other facilities, that is, the many other facilities are constructed as an estimate mode that codes the behavior of not individual facilities, but rather the overall boundary.

In this manner, if boundaries are constituted for estimate models that are nested or made hierarchal, using combinations of different degrees of setting resolution, it is possible to achieve effective energy management in accordance with the management objective and management policy. In designing the optimum boundary resolution  setting and overall structure, it is important to considering the tradeoff between the achieved effect versus the cost or labor.

Because facilities other than "prominent energy-consuming" facilities usually incur excessive labor and cost, the boundary setting resolution of the estimate model should be set low (rough). That is, using the second method to create an estimate model in which the individuality of each of the facilities constituting a boundary region are subsumed and buried greatly facilitates management, operation, and maintenance of estimate models in units of boundaries.

According to the method and apparatus of the present invention, with regard to the status of all facilities (the collection term for production facilities using energy, such as a facility, an equipment, facilities, an apparatuses, an instrument, and an element) or statuses related to the change in the quantity of energy usage and/or the quantity of energy supply, the relationship of variables related to the quantity of energy usage and/or the quantity of energy supply is coded, and it is possible to obtain a facilities modeling function capable of estimate calculation of the quantity of energy usage and/or the quantity of energy supply of facilities having a function that defines a calculation equation or a condition equation that calculates the quantity of energy usage and/or the quantity of energy supply.

In this case variables include instructions (values) from outside that specify facilities operation conditions, measurement values related to facilities operation, information regarding internal operation of facilities, time information, and operating times from a status change.

The facilities modeling function has a facilities information definition function capable of coding at least a status of facilities being in operation, and the quantity of rated energy consumption or rated energy supply at that time.

In this modeling function, the difference between the quantity of actual energy usage or energy supply at the time of operation of the facilities and an estimated quantity of energy usage is evaluated. Doing this makes the following correction to the estimate model (facilities energy characteristics), based on the actual energy information. The conditions for correction of the estimate model (facilities energy characteristics) are the case in which an abnormal state does not occur in the facilities, and the case in which a modification has been made to the facilities.

For each of facilities, selection or combination of "automatic correction" and "manual correction" can be done as the method of correcting the estimate model (facilities energy characteristics). Automatic correction can be done to the estimate model for specific facilities only, and the prohibition of correction with respect to the estimate model of specific facilities can be specified. Because the history of estimate model corrections is successively stored, return can be made to an arbitrarily specified point in time if necessary.

1) Automatic Correction

A: Statistical values of the relationship between variables and energy are used to automatically correct the estimate model (facilities energy characteristics) by a moving average, overall average, or the like.
B: One-shot data of the time period after a specified condition is satisfied until a specified condition is satisfied is used to calculate the facilities energy characteristics for each status and automatically correct the estimate model. Time as a variable is applied in the case in which the facilities energy characteristic is changed.
C: A statistical value of time-series data of the time period after a specified condition is satisfied until a specified condition is satisfied is used to automatically correct the estimate model.

2) Manual Correction

Using past trend data, the data for a specified time period is used to correct the estimate model.
In setting up the estimate model (facilities energy characteristic) at first, taking into consideration whether or not the above-noted B of "1) Automatic Correction" or "2) Automatic Correction" can be used, an item can be added if necessary. C of "1) Automatic Correction" is effective in automatic correction in the case in which there is variation in the energy in a time element for even the same status.

By comparing the estimated quantity of energy usage and/or energy supply of facilities obtained by inputting the above-noted variables obtained during actual operation of the facilities to the above-noted estimate model with the actual quantity of energy usage and/or energy supply of the facilities, the effect of reduction of the quantity of energy usage and/or energy supply in accordance with repair of the facilities can be calculated as a ratio or absolute quantity.

1) Ratio (quantity of energy usage (and quantity of energy supply) per unit time (for example, kW/kW)
2) Absolute value of energy reduction (for example, kWh)

In this connection, it is possible to make a distinction as well regarding abnormalities in the quantity of energy usage and the quantity of energy supply.

1) The case of exceeding a defined variation.
2) Comparison at a defined comparison timing.

By these, by defining an estimate model for the purpose of predicting, based on production information, facilities information (status), and various variables, the quantity of energy usage and the quantity of energy supply in the facilities of targets of energy management, it is possible to create an index that serves as a fair basis regarding energy usage.

It is also possible to simulate the estimated energy consumption in the case of an assumed production condition and plant conditions based on the estimate model and determine the difference with respect to the actual quantity of energy usage, thereby enabling use as the KPI (energy efficiency index) of the reduced energy absolute amount, reduction ratio, or the like in energy-saving operation. By constantly monitoring this KPI, it is possible to diagnose for abnormalities in the facilities and to estimate in energy source units.

Also, using the time-series estimated energy consumption quantity obtained from the estimate model, it is possible to propose an optimum operating plan for energy generation facilities, this enabling the expectation of the achievement of a further energy savings.

When the production conditions and plant conditions are input to the baseline model, it is possible to simulate the hypothesized energy amount corresponding thereto with greater accuracy. The hypothesized energy amount is a future consumed energy trend based on a production plan. By determining the difference between that and the actual energy usage quantity, use is possible as the KPI (energy efficiency index) of the reduced absolute amount, reduction ratio, or the like.

Additionally, in the case in which the energy baseline model satisfies a specified condition, automatic correction is possible. Because this is possible in accordance with the resolution of the model definition by individual facilities, individual status and individual produced article and the like, it is possible to perform not overall model adjustment, but rather partial model adjustment, thereby providing the expectation of improved prediction accuracy and efficient use of computer resources.

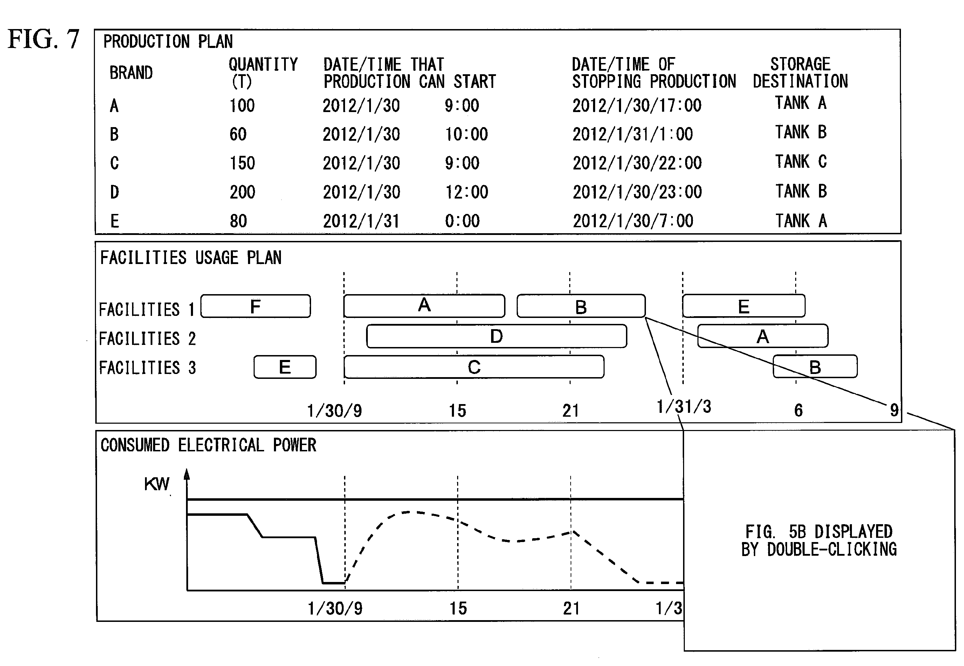

This effect will be described based on the screen embodiment of FIG. 7. FIG. 7 is a drawing showing the assignment by an operator of a facilities operation plan, based on a production plan, as shown in the center section of FIG. 7. The upper section of FIG. 7 shows a production plan. The center section of FIG. 7 is a graphical display of the usage plan of each of facilities. When the operator double clicks on the center section of the screen, FIG. 5B appears. The lower section of FIG. 7 shows the predicted future trend of power consumption. In FIG. 7, 1/30/9 is taken as the present time. Because the energy consumption trend is defined for each operation status, as shown in FIG. 5B, of each of facilities, by totaling the consumption amounts for all facilities in accordance with this facilities plan, it is possible to determine the future consumed energy trend, which is displayed in the lower section. By predicting the future consumed energy trend in this manner, it is possible, for example, in the case of electrical power, to learn of a demand overage at an early point. In the bottom section of FIG. 7, the straight line at the top indicates the contracted for electrical power amount. It is possible, using this trend as a reference, to re-adjust of the production schedule or average out electrical power load, giving consideration to energy. Using this energy trend, it is possible to envision an optimum production facilities plan, giving consideration to the quantity of production and operating restrictions of the energy producing facilities, thereby enabling the expectation of a further energy savings.

As described above, according to the present invention, it is possible to implement energy management techniques that can optimize energy efficiency with high accuracy.

Although the foregoing has been an exemplary demonstration regarding preferred embodiments of the present invention, these are only examples of the present invention, and should not be considered to be restricting, and the present invention can be subjected to additions, omissions, replacements, and other changes within the scope thereof. That is, the present invention is not restricted to the above-described embodiments, but rather is limited by the scope of the attached claims.

Usability in Industry

The present invention can be widely applied to targets of energy management in a factory or plant in which it is desired to improve the energy efficiency. Description of the Reference Numerals
| | |
|---|---|
| 1 | Energy supply facilities (target of energy management) |
| 1a | Energy generation facilities (target of energy management) |
| 1as | Monitor/control system (monitoring unit) |
| 1b | Energy allocation facilities (target of energy management) |
| 1bs | Monitor/control system (monitoring unit) |
| 2 | Energy demand facilities (target of energy management) |
| 2s | Monitor/control system (monitoring unit) |
| 3 | Communication network |
| 4 | External information input unit |
| 5 | Energy management apparatus |
| 5a | Facilities external information interface unit |
| 5b | GUI display console unit |
| 5c | First-order information interface unit |
| 5d | Production schedule acquisition unit |
| 5e | Production schedule storage unit |
| 5f | Facilities energy characteristic generation unit (estimate model definition unit) |
| 5g | Facilities information acquisition unit |
| 5h | Facilities information storage unit |
| 5i | External fluctuation factor information acquisition unit |
| 5j | External fluctuation factor information storage unit |
| 5k | Facilities energy characteristic adjustment unit (estimate model correction unit) |
| 5m | Facilities actual performance value storage unit |
| 5n | Facilities energy characteristic verification unit |
| 5p | Second-order information interface unit |
| 5q | Facilities energy characteristic synthesis unit |
| 5r | Estimate model storage unit |

**Claims**

1.  An energy management method comprising:

    identifying a target of energy management;
    monitoring a time-transitionable status of the target of energy management; and
    defining at least one estimate model to estimate the quantity of energy consumption and the quantity of energy conversion associated with at least one status of the target of energy management, and the energy consumption and the energy conversion being caused by operation of the target of energy management.

2.  The energy management method according to claim 1, wherein defining the estimate model comprises defining a plurality of the estimate models associated with each of a plurality of different statuses of the target of energy management.

3.  The energy management method according to claim 2, further comprising estimating, based on the plurality of estimate models, the quantity of energy consumption and the quantity of energy conversion, the energy consumption and the energy conversion being caused by operation of the target of energy management.

4.  The energy management method according to claim 1, wherein the target of energy management comprises a device, an instrument, an apparatus, an equipment, a facility, a process line, facilities and a factory.

5.  The energy management method according to claim 1, further comprising:

dividing the target of energy management into a plurality of boundaries, wherein

monitoring the time-transitionable status comprises monitoring at least one time-transitionable status of the plurality of boundaries, and

defining the estimate model comprises defining at least one estimate model associated with at least one status of the boundaries.

6. The energy management method according to claim 1, further comprising correcting the estimate model, based on at least one actually measured value of the quantity of energy consumption and the quantity of energy conversion of each of the plurality of different statuses.

7. The energy management method according to claim 6, wherein correcting the estimate model comprises:

selecting one of permissibility and impermissibility to perform automatic estimate model correction; and

storing of a plurality of histories of the estimate model corrections to enable selection of pre-correction version of the estimate model.

8. The energy management method according to claim 2, wherein the estimate model associated with one status of facilities is defined in article name.

9. The energy management method according to claim 1, wherein the estimate model is a compound model that is synthesized by an association between two or more boundaries of different facilities.

10. An energy management apparatus comprising:

a monitoring unit configured to measure the actual quantity of energy consumption and the actual quantity of energy conversion of a target of energy management that either consumes or converts energy by its operation, and to monitor a time-transitionable status of the target of energy management;

an estimate model definition unit configured to define at least one estimate model to estimate the quantity of energy consumption and the quantity of energy conversion, the energy consumption and the energy conversion being caused by operation of the target of energy management associated with at least one status of the target of energy management;

an estimate model storage unit configured to store the estimate model; and

an estimate model correction unit configured to correct and store the estimate model stored in the estimate model storage unit, based on the quantity of energy consumption and the quantity of energy conversion, the energy consumption and the energy conversion being caused by operation of the target of energy management.

11. The energy management apparatus according to claim 10, wherein:

the monitoring unit is configured to measure each a quantity of energy consumption and a quantity of energy conversion of a plurality of boundaries generated by dividing the target of energy management and to monitor each time-transitionable status of the plurality of boundaries;

the estimate model definition unit is configured to define at least one estimate model to estimate a quantity of energy consumption and a quantity of energy conversion, the energy consumption and the energy conversion being caused by operation of each of the plurality of boundaries associated with at least one status of each of the plurality of boundaries; and

the estimate model correction unit is configured to correct the estimate model based on the quantity of energy consumption and the quantity of energy conversion, the energy consumption and the energy conversion being caused by operation of each of the plurality of boundaries, and to store the estimate model in the estimate model storage unit.

12. An energy management system GUI method, comprising:

identifying a plurality of targets of energy management from among energy generation facilities, energy allocation facilities, and energy demand facilities;

monitoring a time-transitionable status of the targets of energy management;

defining an estimate model associated with one status of the targets of energy management; and

estimating, based on the defined estimate model, a quantity of energy consumption and a quantity of energy conversion, the energy consumption and the energy conversion being caused by operation of the targets of energy management;

displaying first and second boundaries in association with one another, the first boundary including the energy demand facilities and the second boundary including at least one of the energy generation facilities and the energy allocation facilities.

13. The energy management system GUI method according to claim 12, wherein

displaying the first and second boundaries comprises displaying first-order information of a past facilities energy value, and second-order information, which is processed or generated based on the first-order information, the first-order information and the second-order information distinguished from each other.

14. The energy management system GUI method according to claim 13, wherein

displaying the first and second boundaries comprises displaying discriminately a first display/operation window screen handling only the first-order information and a second display/operation window screen handling only the second-order information.

15. The energy management system GUI method according to claim 12, wherein

displaying the first and second boundaries comprises displaying the status in the form of a dynamic state transition diagram.

16. The energy management system GUI method according to claim 15, wherein the dynamic state transition diagram is a hierarchically structured bubble chart with correspondence to facilities within boundaries of the targets of energy management.

17. The energy management system GUI method according to claim 15, wherein the bubble chart includes:

bubbles performing input definition and/or output display associated with each of the facilities statuses that transition along the time axis, caused by operation of the target of energy management; and

a state transition route providing a connection between arbitrary bubbles and specifying a transition path between facilities statuses,

wherein the state transition route defines, as a boundary condition, a state during transition between the arbitrary facilities statuses.

18. An energy management method according to claim 1, wherein the target of energy management operates based on production schedule information,

the energy management method further comprises:

estimating the quantity of energy consumption and the quantity of energy conversion in the future, based on the estimate model and the production schedule information.

19. An energy management system, comprising:

energy management facilities being operable based on a production schedule and consuming and converting energy by operation;

a monitoring unit configured to monitor the time-transitionable status, the quantity of energy consumption, and the quantity of energy conversion of the energy management facilities;

an external information input unit configured to obtain and output external information; and

an energy management apparatus configured to manage the quantity of energy consumption and the quantity of energy conversion of the energy management facilities, based on the external information,

wherein, in the energy management system:

the energy management apparatus comprises:

a production schedule information storage unit that stores the production schedule information,

a facilities information storage unit that stores facilities information of the energy management facilities,

an external fluctuation factor information storage unit that stores the external information obtained by the external information input unit,

a facilities actual performance value storage unit that receives as facilities actual performance values from the monitoring unit and stores a quantity of energy consumption and a quantity of energy conversion of the energy management facilities,

a boundary setting unit configured to divide targets of energy management into a plurality of boundaries,

an estimate model definition unit configured to define a plurality of estimate models to estimate a quantity of energy consumption and a quantity of energy conversion associated with at least one status in each of the plurality of boundaries, based on the production schedule information, the facilities information, and the facilities actual performance value,

an estimate model correction unit configured to correct the plurality of estimate models, based on the facilities actual performance value and the external information, and

a GUI display unit configured to synthesize and display by a GUI the plurality of estimate models corrected by the estimate model correction unit.

20. The energy management system according to claim 19, wherein the GUI display unit configured to estimate and display the quantity of energy consumption and the quantity of energy conversion in the future, based on the estimate models and the production schedule information.

21. The energy management system according to claim 19, wherein

the GUI display unit is configured to display a performance index that compares first and second relationships, the first relationship being defined by between the quantity of energy consumption and the quantity of energy conversion of an arbitrary boundary and a variable related to the energies in a baseline time period serving as the reference for comparison, and the second relationship being defined by between the quantity of energy consumption and the quantity of energy conversion of the boundary and a variable related to the energies of the boundary in a reporting time period.

# FIG. 1

## FIG. 2

START

S1 — FACILITIES INFORMATION DEFINITION

S2 — FACILITIES ENERGY CHARACTERISTIC DEFINITION

S3 — PRODUCTION SCHEDULE ACQUISITION

S4 — PARAMETER INPUT

S5 — PERFORM AUTOMATIC ESTIMATE MODEL ADJUSTMENT ? — Yes → 

S10 — EXTERNAL FACTOR INFORMATION ACQUISITION

S11 — PLANT ACTUAL PERFORMANCE VALUE COLLECTION

S12 — FACILITIES MODEL PARAMETER CALCULATION

S13 — FACILITIES MODEL RE-REGISTRATION

No

S6 — FACILITIES ENERGY CHARACTERISTICS SYNTHESIS

S7 — ENERGY CHARACTERISTIC GENERATION

S8 — ALL TARGETS OF FACILITIES COMPLETED ? — No / Yes

S9 — DISPLAY BY GUI

END

21

FIG. 3

FACILITIES 1

| FACILITIES STATUS | NUMBER OF VARIABLES | VARIABLE 1 | | VARIABLE 2 | | |
|---|---|---|---|---|---|---|
| | | NAME/UNITS OF VARIABLE 1 | RELATIONAL EQUATIONS OF VARIABLE 1 AND ENERGY | NAME/UNITS OF VARIABLE 2 | RELATIONAL EQUATIONS OF VARIABLE 1 AND ENERGY | |
| A | 2 | Q: FLOW AMOUNT M3/h | E= Q * P + E0 | P: PRESSURE MPa | | |
| B | 1 | T: TIME Ms | 0<T<1000 E=K1×T | | | |
| C | 1 | FIXED VALUE J | E=E0 | | | |

FACILITIES 2

| C | 1 | FIXED VALUE J | E=E0 | | | |
|---|---|---|---|---|---|---|

EP 2 682 914 A1

# FIG. 4

FACILITIES 1

Condition Def.(Sc–SB)

VARIABLE 1:J [fixed no.]

$S_C$

$E=E_d$

$S_B$

$0< E<1000$

$E=K1*T$

VARIABLE 1:T [Ms]

$S_{halt}$

NA

$S_A$

$E=Q*P+E_o$

VARIABLE 1:Q [M3/h]
VARIABLE 2:P [M Pa]

FACILITIES 1

FACILITIES 2

FACILITIES 1-1

$S_{B1}$

$S_{B2}$

```
// * heating mode 01-2 *//
//* ESUT Time. <<Status B>
#define  K1  0.123······
#define  K2  0.089······
main(void)
 if ( time = K1)
then {
     int e2; double sum;
     sum += e2;
     e2 = K2*sum;
     return (e2)
     }
else  return EXIT;
```

EP 2 682 914 A1

# FIG. 5A

EP 2 682 914 A1

**PLANNED PRODUCTION TIME**

*planned times*

POT

**EXECUTED PRODUCTION TIME**

TPT

Operation 1

Operation N

**PRODUCTION TIME**

BT | TT, WT | BT | TT, WT

**APPARATUS OPERATING TIME**

PCT | DeT | PCT | DeT

**TIME CONTRIBUTING TO PRODUCTION**

PDT | ESUT | PDT | ESUT

*actual (measured) times*

ENERGY

# FIG. 5B

FACILITIES 1

FIG. 6A

BUBBLE b1-2
TEMPERATURE:°C
PRESSURE:Pa/m²

REFINED RANGE OF MODEL
(ESTABLISHED BOUNDARY)

# FIG. 6B

PROMINENT ENERGY USING APPARATUS
EXAMPLE: HEATING FURNACE

BOUNDARY 1

APPARATUS GROUP

APPARATUS GROUP

f

UTILITY FACILITIES GROUP

FACILITIES, APPARATUS

BOUNDARY 2

e

APPARATUS GROUP

BOUNDARY 3
OTHER FACILITIES

f

APPARATUS GROUP

e  APPARATUS

f  FACILITIES

EP 2 682 914 A1

# FIG. 6C

EP 2 682 914 A1

# FIG. 7

**PRODUCTION PLAN**

| BRAND | QUANTITY (T) | DATE/TIME THAT PRODUCTION CAN START | | DATE/TIME OF STOPPING PRODUCTION | STORAGE DESTINATION |
|---|---|---|---|---|---|
| A | 100 | 2012/1/30 | 9:00 | 2012/1/30/17:00 | TANK A |
| B | 60 | 2012/1/30 | 10:00 | 2012/1/31/1:00 | TANK B |
| C | 150 | 2012/1/30 | 9:00 | 2012/1/30/22:00 | TANK C |
| D | 200 | 2012/1/30 | 12:00 | 2012/1/30/23:00 | TANK B |
| E | 80 | 2012/1/31 | 0:00 | 2012/1/30/7:00 | TANK A |

**FACILITIES USAGE PLAN**

FACILITIES 1    F    A    B    E

FACILITIES 2    D    A

FACILITIES 3    E    C    B

1/30/9    15    21    1/31/3    6    9

**CONSUMED ELECTRICAL POWER**

KW

1/30/9    15    21    1/3

FIG. 5B DISPLAYED BY DOUBLE-CLICKING

EP 2 682 914 A1

**EP 2 682 914 A1**

| INTERNATIONAL SEARCH REPORT | International application No. |
|---|---|
| | PCT/JP2012/054897 |

A. CLASSIFICATION OF SUBJECT MATTER
*G06Q50/04*(2012.01)i, *G06Q10/04*(2012.01)i

According to International Patent Classification (IPC) or to both national classification and IPC

B. FIELDS SEARCHED

Minimum documentation searched (classification system followed by classification symbols)
G06Q50/04, G06Q10/04

Documentation searched other than minimum documentation to the extent that such documents are included in the fields searched
Jitsuyo Shinan Koho        1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-259508 A (Hitachi, Ltd.), 13 September 2002 (13.09.2002), entire text; all drawings (Family: none) | 1-21 |
| Y | JP 2009-238246 A (Takasago Thermal Engineering Co., Ltd.), 15 October 2009 (15.10.2009), entire text; all drawings (Family: none) | 1-21 |
| Y | JP 2009-9399 A (Yokogawa Electric Corp.), 15 January 2009 (15.01.2009), entire text; all drawings (Family: none) | 15-17 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 March, 2012 (14.03.12) | 27 March, 2012 (27.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/054897

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-236724 A (Yamatake Corp.),<br>23 August 2002 (23.08.2002),<br>entire text; all drawings<br>(Family: none) | 19-21 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011042413 A

- JP 2007018322 A